# EUROPEAN PATENT APPLICATION

(11) **EP 4 369 093 A1**
(43) Date of publication of application: **15.05.2024**
(21) Application number: 22838029.1
(22) Date of filing: 07.07.2022
(51) Int. Cl.: G03B 17/12, G03B 30/00

(54) **CAMERA MODULE**

(30) Priority: 08.07.2021 KR 20210089797
(71) Applicant: LG Innotek Co., Ltd., Seoul 07796 (KR)
(72) Inventor: HAN, Sang Yeal, Seoul 07796 (KR)
(74) Representative: DREISS Patentanwälte PartG mbB
(86) International application number: PCT/KR2022/009892
(87) International publication number: WO 2023/282677

(57) **Abstract**

A camera module comprises: a lens module including a lens barrel and a flange part protruding from the side of the lens barrel; a first body including a hole in which at least a part of the lens barrel is accommodated; a substrate, which is arranged below the first body and includes an image sensor; and an adhesive arranged between the lens module and the first body, wherein a first groove in which a part of the adhesive is accommodated is arranged on the lower surface of the flange part, and a second groove in which a part of the adhesive is accommodated is arranged on the upper surface of the first body facing the lower surface of the flange part.

## Description

### [Technical Field]

The teachings in accordance with exemplary and non-limiting embodiments of this invention relate generally to a camera module.

### [Background Art]

In recent years, subminiature camera modules have been developed, and subminiature camera modules are widely used in small electronic products such as smartphones, laptops, game consoles, etc.

With the popularity of automobiles, subminiature cameras are not only used in small electronic products, but also in vehicles. For example, vehicles are mounted with black box cameras for vehicle protection or objective data of traffic accidents, rear view cameras that allow the driver to monitor the blind spots at the rear of the vehicle through a screen to ensure safety when reversing, and perimeter detection cameras that can monitor the surroundings of the vehicle.

A camera may comprise a lens, a lens holder for receiving the lens, an image sensor for converting an image of a subject gathered by the lens into an electrical signal, and a printed circuit board on which the image sensor is mounted. The housing forming the exterior of the camera may have an enclosed structure throughout to prevent contamination of the internal components with foreign matter, including moisture.

### [Detailed Description of Invention]

### [Technical Subject]

It is an object of the present exemplary embodiment to provide a camera module in which the lens module can be rigidly fixed through structural improvements, thereby facilitating optical axis alignment and providing the best possible optical characteristics.

### [Technical Solution]

A camera module according to an exemplary embodiment of the present invention may comprise:
a lens module including a lens barrel and a flange part protruding from the side of the lens barrel;
a first body including a hole in which at least a part of the lens barrel is accommodated;
a substrate, which is arranged below the first body and includes an image sensor; and
an adhesive arranged between the lens module and the first body, wherein a first groove in which a part of the adhesive is accommodated is arranged on the lower surface of the flange part, and a second groove in which a part of the adhesive is accommodated is arranged on the upper surface of the first body facing the lower surface of the flange part.

Preferably, but not necessarily, the first groove may include a plurality of first grooves spaced apart from each other in a direction perpendicular to the optical axis, and the second groove may include a plurality of second grooves spaced apart from each other in a direction perpendicular to the optical axis.

Preferably, but not necessarily, at least one of the plurality of second grooves may have a different shape than that of the other second grooves.

Preferably, but not necessarily, a cross-sectional area of the relatively inwardly disposed second groove of the plurality of second grooves may be larger than a cross-sectional area of the relatively outwardly disposed second groove.

Preferably, but not necessarily, an adhesive receiving groove may be disposed on a side of the lens barrel, which is formed to be recessed inwardly more than other areas, to receive a portion of the adhesive.

Preferably, but not necessarily, the adhesive receiving groove may be arranged to overlap the second groove in a direction perpendicular to the optical axis direction.

Preferably, but not necessarily, the side of the lens module and the inner surface of the hole may be spaced apart in a direction perpendicular to the optical axis direction.

Preferably, but not necessarily, the adhesive may be at least partially disposed in the gap.

Preferably, but not necessarily, an outer surface of the adhesive may be inclined to connect a side of the flange part with an upper surface of the first body.

Preferably, but not necessarily, the first groove and the second groove may be stair-cased in a direction perpendicular to the optical axis direction.

### [Advantageous Effect]

The exemplary embodiment of the present invention enables a relatively large area for placement of the adhesive through the first groove and the second groove, which has the advantage of maximizing the adhesive strength of the adhesive proportional to the adhesive area.

### [Brief Description of Drawings]

FIG. 1 is a perspective view illustrating an appearance of a camera module according to an exemplary embodiment of the present invention.
FIG. 2 is a cross-sectional view of a camera module according to an exemplary embodiment of the present invention.
FIG. 3 is an exploded perspective view of a camera module according to an exemplary embodiment of the present invention.
FIG. 4 is a diagram illustrating a combined structure of a lens module and a first body according to a first exemplary embodiment of the present invention.
FIG. 5 is an enlarged view of a flange part of a lens module according to a first exemplary embodiment of the present invention.
FIG. 6 is a diagram illustrating a coupling structure of the lens module and the first body according to a second exemplary embodiment of the present invention.
FIG. 7 is a diagram illustrating the coupling structure of the lens module and the first body according to a third exemplary embodiment of the present invention.

### [Best Mode]

Hereinafter, exemplary embodiments of the present invention will be described in detail with reference to the accompanying drawings.

However, the technical idea of the present invention is not limited to some of the embodiments described, but may be implemented in many different forms, and one or more of its components may be optionally combined or substituted between embodiments, so long as they are within the scope of the technical idea of the present invention.

Furthermore, terms (including technical and scientific terms) used in the embodiments of the invention, unless expressly specifically defined and described, are to be construed in the sense in which they would be understood by a person of ordinary skill in the technical field to which the invention belongs, and commonly used terms, such as dictionary-defined terms, are to be construed in light of their contextual meaning in the relevant art.

Furthermore, the terminology used in the embodiments of the invention is intended to describe the embodiments and is not intended to limit the invention.

In this specification, the singular may include the plural unless the context otherwise requires, and references to "at least one (or more) of A and (or) B and C" may include one or more of any combination of A, B, and C that may be assembled.

In addition, the terms first, second, A, B, (a), (b), and the like may be used to describe components of embodiments of the invention. Such terms are intended only to distinguish one component from another and are not intended to limit the nature or sequence or order of such components by such terms.

Furthermore, when a component is described as "connected," "coupled," or "attached" to another component, it can include cases where the component is "connected," "coupled," or "attached" to the other component directly, as well as cases where the component is "connected," "coupled," or "attached" because of another component that is between the component and the other component.

Furthermore, when described as being formed or disposed "above" or "below" each component, "above" or "below" includes not only when two components are in direct contact with each other, but also when one or more other components are formed or disposed between the two components. Furthermore, when expressed as "above" or "below", it may include the meaning of a downward direction as well as an upward direction with respect to a single component.

As used herein, "optical axis direction" is defined as the optical axis direction of the lens. On the other hand, "optical axis direction" may correspond to "up and down direction", "z-axis direction", etc.

Hereinafter, the present invention will be described in more detail with reference to the accompanying drawings.

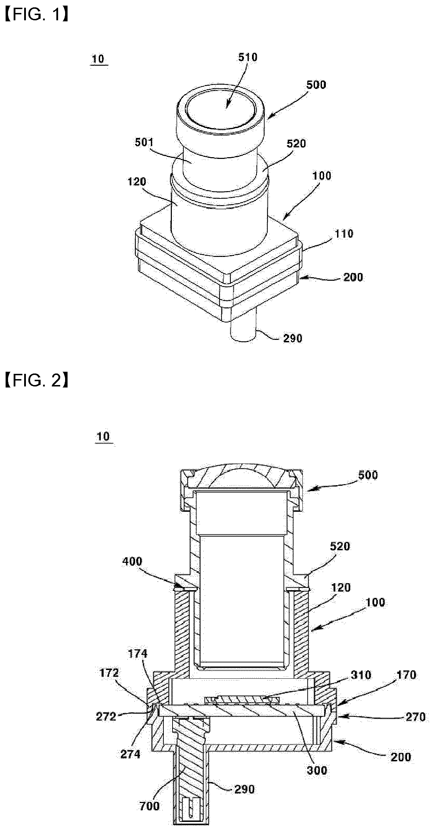

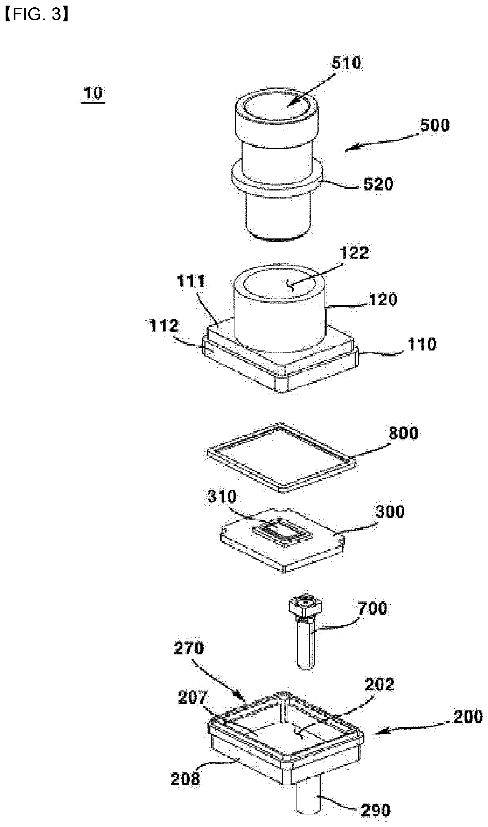

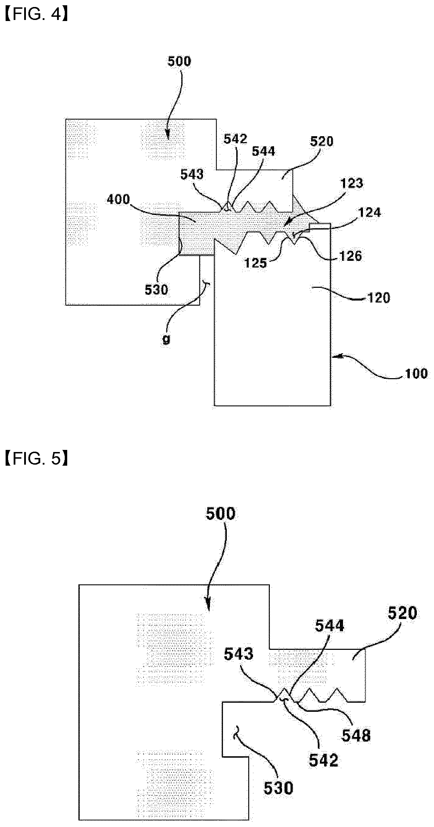

FIG. 1 is a perspective view illustrating an appearance of a camera module according to an exemplary embodiment of the present invention, FIG. 2 is a cross-sectional view of a camera module according to an exemplary embodiment of the present invention, FIG. 3 is an exploded perspective view of a camera module according to an exemplary embodiment of the present invention, FIG. 4 is a diagram illustrating a combined structure of a lens module and a first body according to a first exemplary embodiment of the present invention, and FIG. 5 is an enlarged view of a flange part of a lens module according to a first exemplary embodiment of the present invention.

Referring to FIGS. 1 to 5, a camera module (10) according to an exemplary embodiment of the present invention may be a vehicle camera module. The camera module (10) may be coupled to a vehicle. The camera module (10) may be used in one or more of a front camera, a side camera, a rear camera, and a black box of the vehicle. The camera module (10) may be disposed at the front of the vehicle. The camera module (10) may be disposed at the rear of the vehicle. The camera module (10) may be coupled to a windscreen of the vehicle. The camera module (10) may be coupled to the windscreen of the front or rear of the vehicle. The camera module (10) may be disposed on the side of a vehicle. The camera module (10) may photograph a subject and output an image to a display (not shown).

The camera module (10) may include a first body (100). The first body (100) may be referred to as a front body, an upper housing, or a first housing. The first body (100) may include a body part (110). The first body (100) may include a barrel part (120). The first body (100) may be coupled with a lens module (500). The body part (110) and the barrel part (120) of the first body (100) may be integrally formed. In a modification, the body part (110) and the barrel part (120) may each be formed separately.

The body part (110) may be coupled to the barrel part (120). The body part (110) may be integrally formed with the barrel part (120). The body part (110) may be formed of a metal material. The body part (110) may be disposed over a second body (200), which will be described later. The body part (110) may be coupled to the second body (200). A bottom end of the body part (110) may be secured to the second body (200). The body part (110) may be coupled to the second body (200) by an adhesive member (800). The body part (110) may be coupled to a substrate (300), which will be described later.

The body part (110) may be formed as a rectangular shape with an opening at the bottom. In this case, the corners of the body part (110) may be rounded. The body part (110) may include an upper plate (111) and a first side plate (112) extending from the upper plate (111). The upper plate (111) may be formed in a rectangular shape. The upper plate (111) may extend outwardly from a lower outer peripheral surface of the barrel part (120). A first side plate (112) may extend downwardly from an outer edge of the upper plate (111). The first side plate (112) may comprise a plurality of plates. The first side plate (112) may comprise four side plates. The first side plate (112) may be formed in the shape of a square plate. The first side plate (112) may include a first-1 side plate and a first-2 side plate, a first-3 side plate disposed opposite the first-1 side plate, and a first-4 side plate disposed opposite the first-2 side plate. The first side plate (112) may include first and fourth corners disposed between the first-1 and first-4 side plates, respectively. Each of the first to fourth corners may comprise a rounded shape in at least a portion.

On an inner side of the body part (110), a space part may be formed that is compartmentalized from other regions. The space part may be open at the bottom and covered at the top by the barrel part (120) and the underside of the lens module (500).

The body part (110) may include a first edge region (170). The first edge region (170) may be disposed on an outer side of the space part. The first edge region (170) may form a bottom surface of the body part (110).

The first edge region (170) may include a first protrusion (172) and a first engagement groove (174). Relative to the center of the body part (110), the first engagement groove (174) may be disposed on an inner side of the first protrusion (172).

The first protrusion (172) may be formed to project downwardly from a bottom surface of the body part (110) than other areas. A lower end of the first protrusion (172) may project downwardly from an upper surface of the substrate (300). The lower end of the first protrusion (172) may be disposed lower than the bottom surface of the first engagement groove (174).

The first engagement groove (174) may be disposed on an inner side of the first protrusion (172). The first engagement groove (174) may be formed to be recessed upwardly from the bottom of the first protrusion (172). A bottom surface of the first engagement groove (174) may be disposed above the bottom of the first protrusion (172). The bottom surface of the first engagement groove (174) may be disposed above an upper surface of the substrate (300). The bottom surface of the first engagement groove (174) may be defined as a bottom surface of the first body (100).

On an inner side of the first engagement groove (174) of the bottom side of the first body (100), a ground portion may be disposed that projects downwardly and contacts an upper surface of the substrate (300).

The first body (100) may include a barrel part (120). The barrel part (120) may be a lens barrel. The barrel part (120) may be formed of a metal material. The barrel part (120) may be disposed on the body part (110). The barrel part (120) may extend from an upper surface of the body part (110). The barrel part (120) may be integrally formed with the body part (110). In a modification, the barrel part (120) may be coupled to the body part (110). In this case, the barrel part (120) may be secured to the body part (110) by an adhesive member (800). The barrel part (120) may accommodate the lens module (500) therein. The barrel part (120) may include a hole (122). The lens module (500) may be disposed in the hole (122) of the barrel part (120). The inner circumferential surface of the hole in the barrel part (120) may be formed in a shape and size that corresponds to the outer circumferential shape and size of the lens module 500.

The camera module (10) may include a lens module (500). The lens module (500) may be at least partially disposed in the barrel part (120). The lens module (500) may be coupled to the barrel part (120). The lens module (500) may be coupled to a hole (122) in the barrel part (120). In this case, the lens module (500) and the barrel part (120) may be screwed together.

The lens module (500) may include a plurality of lenses (510). The plurality of lenses (510) may be housed in the barrel. The lens module (500) may include a lens barrel (501) that accommodates the plurality of lenses (510). A space within the lens barrel (501) may be formed to accommodate the plurality of lenses (510). The plurality of lenses (510) may be screw-coupled to the space within the lens barrel (501), but this is not intended to be limiting and there are no restrictions on how the lenses (510) and the lens barrel (501) are coupled.

The lens module (500) may be aligned with an image sensor (described later). The lens module (500) may be optically aligned with the image sensor. The optical axis of the lens module (500) may coincide with the optical axis of the image sensor. The first body (100) may include an infrared ray filter (IR filter) disposed between the lens module (500) and the image sensor.

An outwardly projecting flange part (520) may be disposed on an outer surface of the lens module (500). The flange part (520) may project outwardly from an outer surface of the lens barrel (501). The flange part (520) may have a ring-shaped cross-section. When the lens module (500) is coupled to the first body (100), the flange part (520) may be disposed on top of the barrel portion (120). A side of the flange part (520) may be disposed inwardly of a side of the first body (100).

The camera module (10) may include a second body (200). The second body (200) may be referred to as one of a rear body, a lower housing, and a second housing. The second body (200) may be formed in a rectangular shape with an open top. The second body (200) may be formed of a metal material. The second body (200) may be disposed below the first body (100). The second body (200) may be coupled to the first body (100). The second body (200) may be coupled with the first body (100) to form an interior space. The second body (200) may include a space part (202) having an upper surface opening.

The second body (200) may include a bottom plate (207). The bottom plate (207) may oppose an upper plate (111) of the body part (110) of the first body (100). The bottom plate (207) may be spaced apart from the upper plate (111) of the body part (110) of the first body (100) in an optical axis direction. The bottom plate (207) may be parallel to the upper plate (111) of the body part (110) of the first body (110). The bottom plate (207) may be formed in a rectangular shape. In this case, the corners of the bottom plate (207) may include a rounded shape at least in part.

The second body (200) may include a second side plate (208). The second side plate (208) may extend from the bottom plate (207). The second side plate (208) may extend from an outer edge of the bottom plate (207). A shield can (not shown) may be disposed on the second side plate (208). An inner surface of the second side plate 208 may be contacted by the shield can. A top of the second sidewall 208 may be coupled to the first body 100. An outer surface of the second side plate (208) may be disposed in the same plane as that of an outer surface of the first side plate (112) of the first body (100).

The second body (200) may include a connector ejection part (290). The connector ejection part (290) may be coupled to the bottom plate (207). The connector ejection part (290) may be disposed in a hole (not shown) in the bottom plate (207). The connector ejection part (290) may pass through a hole in the bottom plate (207). The connector ejection part (290) may have a connector (700) disposed therein. The connector ejection part (290) may be formed of a metal material.

The second body (200) may include a second edge region (270). The second edge region (270) may be disposed on an outer side of the space part (202). The second edge region (270) may be formed on an upper surface of the second side plate (208). The second edge region (270) may form an upper edge of the second body (200). The second edge region (270) may be disposed to face the first edge region (170) in an optical axis direction.

When the first body (100) and the second body (200) are joined, the first edge region (170) and the second edge region (270) may be disposed at least partially spaced apart in the optical axis direction. When the first body (100) and the second body (200) are joined, an adhesive may be disposed between the first edge region (170) and the second edge region (270). Here, the adhesive may include an epoxy. The second edge region (270) may include a second protrusion (274) and a second engagement groove (272). With respect to the optical axis direction, the first protrusion (172) and the second engagement groove (272) may be disposed opposite each other, and the first engagement groove (174) may be disposed opposite the second protrusion (274).

The second protrusion (274) may be formed to project upwardly from an upper surface of the second body (200). The second protrusion (274) may be formed to project upwardly from an upper surface of the second side plate (208). The second protrusion (274) may be disposed at least partially on an inner side of the first engagement groove (174). With respect to a direction perpendicular to the optical axis direction, the second protrusion (274) may be disposed to at least partially overlap the first protrusion (172). An upper surface of the second protrusion (274) may be disposed above a bottom surface of the second engagement groove (272). The second engagement groove (272) may be disposed on an outer side of the second protrusion (274). The bottom surface of the second engagement groove (272) may be disposed lower than the upper surface of the second protrusion (274). The second engagement groove (272) may engage the first protrusion (172). The bottom surface of the second engagement groove (272) may contact the bottom surface of the first protrusion (172), but alternatively, the bottom surface of the second engagement groove (272) and the bottom surface of the first protrusion (172) may be spaced apart in the optical axis direction.

The camera module (10) may include a substrate (300). The substrate (300) may be a printed circuit board. The substrate (300) may be disposed between the first body (100) and the second body (200). The substrate (300) may be disposed to overlap the first edge region (170) or the second edge region (270) in a direction perpendicular to the optical axis direction.

An image sensor (not shown) may be disposed on an upper surface of the substrate (300). A connector (700) may be coupled to a bottom surface of the substrate (300). The substrate (300) may be electrically connected to the connector (700). An upper surface of the substrate (300) may be in contact with a bottom surface of the first body (100), and a bottom surface of the substrate (300) may be in contact with an upper surface of the second body (200).

Hereinafter, the coupling structure of the lens module (500) and the first body (100) will be described.

Referring to FIGS. 4 and 5, the camera module (10) may include an adhesive (400). The adhesive (400) may mutually bond the first body (100) and the lens module (500). The adhesive (400) may be disposed between the first body (100) and the lens module (500). The first body (100) may partially contact at least one of the bottom surface of the flange part (520), a side of the lens barrel (501), an upper surface of the barrel portion (120), and an inner surface of the barrel portion (120). The adhesive (400) may include an epoxy, and may cure to maintain a firm bond between the lens module (500) and the first body (100).

The flange part (520) may be disposed to at least partially overlap the barrel part (120) in an optical axis direction. A side of the flange part (520) may be disposed inwardly in a direction perpendicular to the optical axis direction than a side of the barrel part (120). The sides of the lens barrel (501) may be spaced apart from the inner surface of the barrel part (120) by a predetermined distance. A gap (g) may be formed between the side of the lens barrel (501) and the inner surface of the barrel part (120). A bottom surface of the flange part (520) may be spaced apart from the upper surface of the barrel part (501) by a predetermined distance in the optical axis direction.

An adhesive (400) may be disposed between the bottom surface of the flange part (520) and the upper surface of the barrel part (501). In the lower part of the flange part (520) of the side of the lens barrel (501), an adhesive receiving groove (530) that is recessed inwardly than other regions may be formed. The bottom surface of the adhesive receiving groove (530) may be disposed inwardly than other regions of the side of the lens barrel (501). The adhesive receiving groove (530) may be disposed to overlap the upper surface of the barrel part (120) in a direction perpendicular to the optical axis direction. The adhesive receiving groove (530) may have a ring-shaped cross-section along the circumferential direction of the lens barrel (501).

To provide a relatively larger placement area for the adhesive (400), a first groove (542) may be disposed on the bottom surface of the flange part (520). The first groove (542) may have a shape that is more upwardly recessed than other regions of the bottom side of the flange part (520). The first groove (542) may be provided in a plurality and spaced apart from each other in a direction perpendicular to the optical axis direction. The plurality of first grooves (542) may form a pattern on the bottom surface of the flange part (520). The first groove (542) may include a first slope (543) and a second slope (544). The first groove (542) may be shaped by the first slope (543) and the second slope (544) to have a cross-sectional area that narrows upwardly.

The first slope (543) and the second slope (544) may form an acute angle with each other, with each one end disposed on the bottom surface of the flange part (520), and each other end may be connected at the top end of the first groove (542). The top end of the first groove (542) may be disposed above the top end of the adhesive receiving groove (530). The top end of the adhesive receiving groove (530) may be disposed to form a plane coplanar with the bottom of the flange part (520).

To ensure a relatively larger placement area for the adhesive (400), a second groove (124) may be disposed on the upper surface of the first body (100), i.e., the upper surface of the barrel part (120). The second groove (124) may have a shape that is recessed lower than other areas of the upper surface of the barrel part (120). The second groove (124) may be arranged to at least partially overlap the first groove (542) in an optical axis direction. The second groove (124) may be plural and spaced apart from each other in a direction perpendicular to the optical axis direction. The plurality of second grooves (124) may form a pattern on the upper surface of the barrel part (120). At least one of the plurality of second grooves (124) may be formed with a different cross-sectional shape than the other second groove (124). As shown in FIG. 4, a relatively inwardly disposed second groove (124) may be formed with a larger cross-sectional area than a relatively outwardly disposed second groove (124).

The second groove (124) may include a third slope (125) and a fourth slope (126). The third slope (125) and fourth slope (126) may cause the second groove (124) to have a downwardly narrowing cross-sectional area. The third slope (125) and the fourth slope (126) may form acute angles to each other, with each one end disposed on an upper surface of the barrel part (120), and each other end may be connected at the bottom surface of the second groove (124). The top end of the second groove (125) may be disposed to overlap the adhesive receiving groove (530) in a direction perpendicular to the optical axis direction. The bottom end of the adhesive receiving groove (530) may be disposed lower than the top end of the barrel part (120).

The adhesive (400) may be disposed between the adhesive receiving groove (530), the bottom surface of the flange part (520) including the first groove (542), and the upper surface of the barrel part (120) including the second groove (124) to mutually bond the lens module (500) and the first body (100). In this case, an outer surface of the adhesive (400) may be formed to connect the side of the flange part (520) and the upper surface of the barrel part (120), and the outer surface of the adhesive (400) may be sloped such that at least a portion of the outer surface of the adhesive (400) may increase in distance from the side of the lens barrel (501) downwardly.

According to the above structure, it is possible to secure a relatively larger placement area for the adhesive (400) through the first groove (542) and the second groove (124), thus having the advantage of maximizing the adhesive strength of the adhesive (400) proportional to the adhesive area.

Hereinafter, a camera module according to the second exemplary embodiment of the present invention will be described.

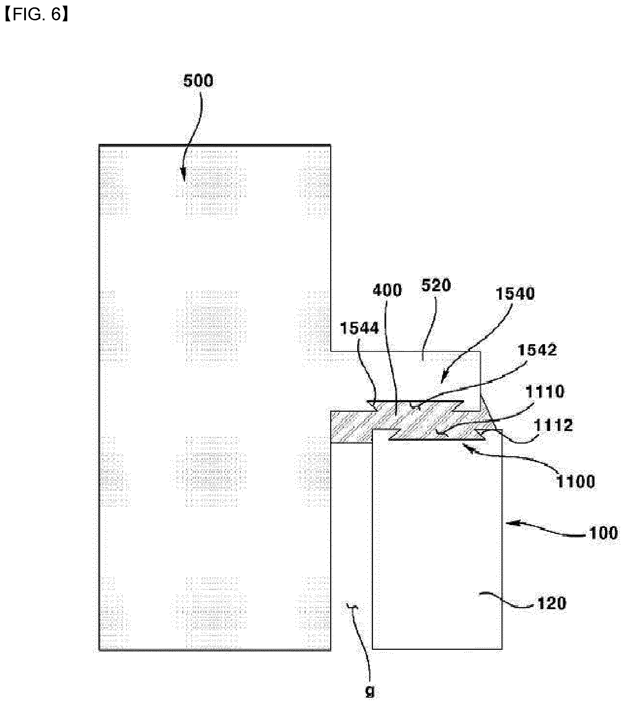

FIG. 6 is a drawing illustrating a coupling structure of a lens module and a first body according to a second exemplary embodiment of the present invention. The second exemplary embodiment is identical to the first exemplary embodiment in other respects, but there is a difference in the shape of the first groove and the second groove. Therefore, only the characteristic parts of the second exemplary embodiment will be described hereinafter, and the description of the first exemplary embodiment will be invoked for the remaining parts.

Referring to FIG. 6, the camera module (10) according to the second exemplary embodiment may include a first groove (1540) and a second groove (1100) to provide a larger placement area for an adhesive member (400). The first groove (1540) may be formed on the bottom surface of the flange part (520). The first groove (1540) may be formed to be more upwardly recessed than other areas on the bottom surface of the flange part (520). The first groove (1540) may have a shape that increases in cross-sectional area upwardly. Accordingly, a sloped surface (1544) may be formed on the inner surface of the first groove (1540). The second groove (1100) may be formed on an upper surface of the barrel part (120). The second groove (1100) may be formed to be recessed downwardly in the upper surface of the barrel part (120) than in other areas. The second groove (1100) may have a shape that increases in cross-sectional area downwardly. Accordingly, a sloped surface (1112) may be formed on the inner surface of the second groove (1100).

The first groove (1540) and the second groove (1100) may be formed to correspond to each other in cross-sectional shape. The first groove (1540) and the second groove (1100) may be arranged such that at least a portion of the first groove (1540) may overlap in the optical axis direction, and a portion of the second groove (1100) may be arranged such that they may not overlap in the optical axis direction. Accordingly, the first groove (1540) and the second groove (1100) may be disposed to step over each other in a direction perpendicular to the optical axis direction.

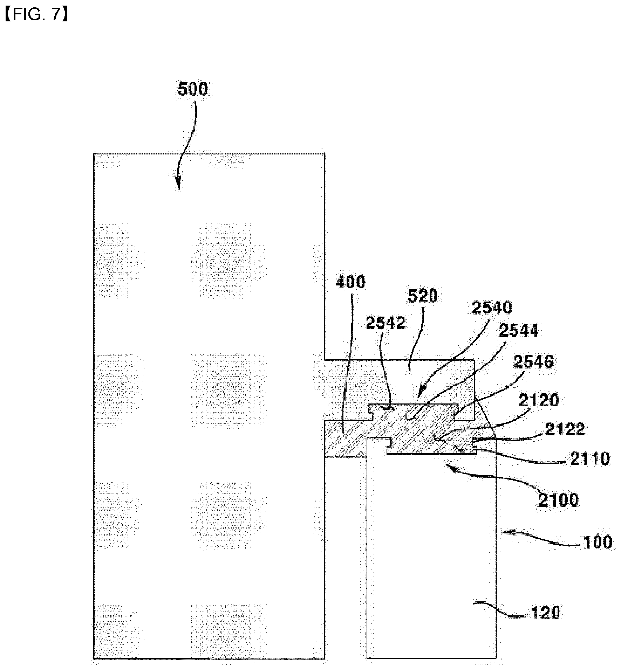

FIG. 7 is a diagram illustrating a coupling structure of a lens module and a first body according to a third exemplary embodiment of the present invention. The third exemplary embodiment is identical to the first exemplary embodiment in other respects, but differs in the shape of the first groove and the second groove. Therefore, only the characteristic parts of the third exemplary embodiment will be described hereinafter, and the description of the first embodiment will be invoked for the remaining parts.

Referring to FIG. 7, the camera module (10) according to the third exemplary embodiment may include a first groove (2540) and a second groove (2100) to provide a larger placement area for the adhesive member (400). The first groove (2540) may be formed on the bottom surface of the flange part (520). The first groove (2540) may be formed to be recessed upwardly from the bottom surface of the flange part (520) than other areas. The first groove (2540) may have a plurality of regions with different cross-sectional areas. The first groove (2540) may include a first region (2542) having a first cross-sectional area, and a second region (2544) having a second cross-sectional area smaller than the first cross-sectional area. The first region (2542) may be disposed on top of the second region (2544). An inner surface of the first groove (2540) may have a first staircase (2546) that projects inwardly to form an inner surface of the second region (2544).

The second groove (2100) may be formed on an upper surface of the barrel part (120). The second groove (2100) may be formed in a region of the upper surface of the barrel part (120) that is recessed lower than other regions. The second groove (2100) may have a plurality of regions with different cross-sectional areas. The second groove (2100) may include a third region (2120) having a first cross-sectional area and a fourth region (2110) having a second cross-sectional area greater than the first cross-sectional area. The third region (2120) may be disposed on an upper surface of the fourth region (2110). An inner surface of the second groove (2100) may have a second staircase (2122) that projects inwardly to form an inner surface of the third region (2120). The first groove (2540) and the second groove (2100) may be formed to correspond to each other in cross-sectional shape. The first groove (2540) and the second groove (2100) may be arranged such that at least a portion of the first groove (2540) and the second groove (2100) overlap in the optical axis direction, and the remaining portion may be arranged such that they do not overlap in the optical axis direction. Accordingly, the first groove (2540) and the second groove (2100) may be disposed to step over each other in a direction perpendicular to the optical axis direction.

Although exemplary embodiments of the present invention have been described with reference to the accompanying drawings, one having ordinary skill in the technical field to which the present invention belongs will understand that the invention may be practiced in other specific forms without altering its technical ideas or essential features. It should therefore be understood that the exemplary embodiments described above are exemplary in all respects and not limiting.

## Claims

1. A camera module comprising:
a lens module including a lens barrel and a flange part protruding from the side of the lens barrel;
a first body including a hole in which at least a part of the lens barrel is accommodated;
a substrate, which is arranged below the first body and includes an image sensor; and
an adhesive arranged between the lens module and the first body, wherein a first groove in which a part of the adhesive is accommodated is arranged on the lower surface of the flange part, and a second groove in which a part of the adhesive is accommodated is arranged on the upper surface of the first body facing the lower surface of the flange part.

2. The camera module of claim 1, wherein the first groove includes a plurality of first grooves spaced apart from each other in a direction perpendicular to the optical axis, and the second groove includes a plurality of second grooves spaced apart from each other in a direction perpendicular to the optical axis.

3. The camera module of claim 2, wherein at least one of the plurality of second grooves has a different shape than that of the other second grooves.

4. The camera module of claim 2, wherein a cross-sectional area of the relatively inwardly disposed second groove of the plurality of second grooves is larger than a cross-sectional area of the relatively outwardly disposed second groove.

5. The camera module of claim 1, wherein an adhesive receiving groove is disposed on a side of the lens barrel, which is formed to be recessed inwardly more than other areas, to receive a part of the adhesive.

6. The camera module of claim 5, wherein the adhesive receiving groove is arranged to overlap the second groove in a direction perpendicular to the optical axis direction.

7. The camera module of claim 1, wherein the side of the lens module and the inner surface of the hole are spaced apart in a direction perpendicular to the optical axis direction.

8. The camera module of claim 7, wherein the adhesive may be at least partially disposed in the gap.

9. The camera module of claim 1, wherein an outer surface of the adhesive is inclined to connect a side of the flange part with an upper surface of the first body.

10. The camera module of claim 1, wherein the first groove and the second groove are staircased in a direction perpendicular to the optical axis direction.
